# EUROPÄISCHE PATENTSCHRIFT

(11) **EP 3 929 539 B1**
(45) Veröffentlichungstag und Bekanntmachung des Hinweises auf die Patenterteilung: **24.08.2022**
(21) Anmeldenummer: 20181310.2
(22) Anmeldetag: 22.06.2020
(51) Int. Cl.: G01D 5/244, G01D 11/24, G01D 5/20

(54) **ABTASTEINHEIT UND DAMIT AUSGESTATTETER DREHGEBER**
SCANNING UNIT AND ROTARY ENCODER WITH SAME
UNITÉ DE DÉTECTION ET CAPTEUR ROTATIF ÉQUIPÉ D'UNE TELLE UNITÉ DE DÉTECTION

(43) Veröffentlichungstag der Anmeldung: 29.12.2021
(73) Patentinhaber: Dr. Johannes Heidenhain GmbH, 83301 Traunreut (DE)
(72) Erfinder: EDER, Dr. Peter, 83365 Nußdorf (DE); THALER, Josef, 83301 Traunreut (DE); AHRENDT, Dirk, 83278 Traunstein (DE); BRANDL, Alois, 83313 Siegsdorf (DE); JÄGER, Thomas, 83278 Traunstein (DE)

(56) Entgegenhaltungen:
- EP-A1- 2 674 764
- EP-A1- 3 505 258
- DE-B3-102007 014 781
- US-A1- 2018 375 405

## Beschreibung

### GEBIET DER TECHNIK

Die Erfindung betrifft eine Abtasteinheit zur Abtastung eines relativ zur Abtasteinheit drehbaren Skalenelements gemäß dem Anspruch 1 sowie einen Drehgeber, der mit einer derartigen Abtasteinheit ausgestattet ist.

Drehgeber werden beispielsweise als Winkelmessgeräte zur Bestimmung der Winkelposition zweier relativ zueinander drehbarer Maschinenteile verwendet.

Bei induktiven Drehgebern sind häufig Erregerleiterbahnen und Empfängerspuren etwa in Form von Leiterbahnen auf einer gemeinsamen meist mehrlagigen Leiterplatte aufgebracht, die beispielsweise mit einem Stator eines Drehgebers fest verbunden ist. Dieser Leiterplatte gegenüber befindet sich ein Skalenelement, auf dem Teilungsstrukturen aufgebracht sind, und welches mit dem Rotor des Drehgebers drehfest verbunden ist. Wenn an den Erregerspulen ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Bei Drehgebern, die nach einem optischen Prinzip arbeiten, wird häufig ein Lichtstrahl an einer drehbaren Scheibe, welche Teilungsstrukturen aufweist, reflektiert, wobei danach das reflektierte und modulierte Licht von einem Lichtdetektor empfangen wird. Die empfangene Lichtintensität beinhaltet die Information über die relative Winkelstellung.

Häufig werden derartige Drehgeber als Messgeräte für elektrische Antriebe, zur Bestimmung der Relativbewegung beziehungsweise der Relativlage von entsprechenden Maschinenteilen eingesetzt. In diesem Fall werden die erzeugten Winkelpositionswerte einer Folgeelektronik zur Ansteuerung der Antriebe über eine entsprechende Schnittstellenanordnung zugeführt.

### STAND DER TECHNIK

In der DE 10 2018 202 239 A1 der Anmelderin wird eine Winkelmesseinrichtung beschrieben, die eine ringförmige Leiterplatte zur Abtastung einer Winkelskala umfasst. Die Leiterplatte ist an einem Absatz eines Gehäuses der Winkelmesseinrichtung befestigt.

Die US 2018/0375405 A1 beschreibt eine Winkelmesseinrichtung mit einer Leiterplatte, auf der eine Abtasteinheit montiert ist. Die Leiterplatte ist mittels Befestigungsschrauben an einem Halterahmen befestigt.

### ZUSAMMENFASSUNG DER ERFINDUNG

Der Erfindung liegt die Aufgabe zugrunde eine Abtasteinheit zu schaffen, die wirtschaftlich herstellbar ist und eine kompakte Bauform aufweist und dennoch eine hohe Messgenauigkeit ermöglicht.

Diese Aufgabe wird erfindungsgemäß durch die Merkmale des Anspruches 1 gelöst.

Demnach ist die Abtasteinheit zur Abtastung eines relativ zur Abtasteinheit um eine Achse drehbaren Skalenelements geeignet, wobei die Abtasteinheit einen Metallrahmen und eine Leiterplatte umfasst. Die Leiterplatte weist ein Substrat auf, welches eine erste Fläche, eine der ersten Fläche gegenüberliegende zweite Fläche sowie eine umlaufende dritte Fläche aufweist. An der ersten Fläche ist eine Aufnehmeranordnung beziehungsweise eine Sensoranordnung angeordnet. An beziehungsweise auf der zweiten Fläche sind elektronische Bauteile montiert. Die dritte Fläche weist mehrere konkave Einbuchtungen auf. Der Metallrahmen weist eine durchgängige erste Ausnehmung auf, die von einer Innenseite des Metallrahmens radial begrenzt ist, wobei die Innenseite mehrere nach innen ragende Elemente aufweist. Die Innenseite des Metallrahmens umschließt die Einbuchtungen der umlaufenden dritte Fläche des Substrats. Die nach innen ragenden Elemente greifen derart in die konkaven Einbuchtungen ein, dass das Substrat unter mechanischer Spannung im Metallrahmen fixiert ist.

Insbesondere ist unter der durchgängigen ersten Ausnehmung eine Ausnehmung zu verstehen, die keinen Absatz aufweist, so dass also entlang jeder zur Achse parallelen Linie auf der Innenseite der Ausnehmung der radiale Abstand zur Achse für ein und dieselbe Linie stets gleich groß ist.

In diesem Zusammenhang resultieren insbesondere die mechanischen Spannungen aus radial orientierten Kräften, also aus Klemmkräften in Richtung der Achse.

Häufig wird das Substrat zusätzlich zur beschriebenen Klemmung infolge der erzeugten mechanischen Spannungen noch durch eine redundante Klebeverbindung fixiert beziehungsweise gesichert.

Insbesondere kann die Abtasteinheit vier nach innen ragende Elemente aufweisen, die derart in die konkaven Einbuchtungen eingreifen, dass die Leiterplatte beziehungsweise das Substrat unter mechanischer Spannung im Metallrahmen fixiert ist.

Mit Vorteil weisen die nach innen ragenden Elemente jeweils eine parallel zur Achse verlaufende Kante beziehungsweise Schneide auf.

Gemäß einer weiteren Ausgestaltung der Erfindung weist der Metallrahmen eine scheibenförmige beziehungsweise in erster Näherung ringförmige Gestalt auf. Somit weist der Metallrahmen insbesondere eine Gestalt eines näherungsweisen Hohlzylinders auf, dessen Durchmesser um ein Vielfaches höher ist als seine Dicke. Insbesondere ist der Metallrahmen aus einer ebenen Platte herausgearbeitet, so dass die ringförmigen Deckflächen beziehungsweise die Stirnflächen des Metallrahmens keine auskragenden Bereiche aufweisen. Vielmehr sind die Stirnflächen des Metallrahmens eben und parallel zueinander orientiert. Vorzugsweise ist der Metallrahmen umlaufend geschlossen ausgestaltet. Er kann aber gegebenenfalls auch nicht geschlossen ausgeführt sein, also einen Spalt aufweisen, dessen Spaltbreite sich in Umfangsrichtung erstreckt.

Die Stirnflächen (die ringförmigen Deckflächen) des Metallrahmens sind im Übrigen orthogonal zur Achse angeordnet.

Die Innenseite des Metallrahmens und die umlaufende Außenseite beziehungsweise Außenkontur des Metallrahmens sind bezüglich ein und desselben Punktes, der vorzugsweise auf der Achse zu liegen kommt, punktsymmetrisch zueinander angeordnet.

Vorteilhafterweise weist der Metallrahmen in einer Richtung senkrecht zur Achse eine erste Ausdehnung auf, die als Durchmesser oder als maximaler Durchmesser gesehen werden kann. Der Metallrahmen weist zudem in Richtung der Achse eine zweite Ausdehnung auf, die auch als Dicke bezeichnet werden kann. Die erste Ausdehnung ist mindestens fünfmal größer als die zweite Ausdehnung, mit Vorteil mindestens zehnmal größer, insbesondere mindesten zwölfmal größer.

Mit Vorteil weist der Metallrahmen eine weitgehend kreisförmige Außenkontur auf.

Vorteilhafterweise ist die Leiterplatte im Metallrahmen derart angeordnet, dass der Metallrahmen bezüglich der ersten Fläche des Substrats einen ersten axialen Überstand aufweist.

In weiterer Ausgestaltung der Erfindung ist die Leiterplatte im Metallrahmen derart angeordnet, dass der Metallrahmen bezüglich der zweiten Fläche des Substrats einen zweiten axialen Überstand aufweist. Es können aber die elektronischen Bauelemente in Richtung der Achse über die Kontur des Metallrahmens herausragen.

Mit Vorteil weist der Metallrahmen zweite Ausnehmungen, die insbesondere als Bohrungen ausgestaltet sein können, zur Befestigung an einem Maschinenteil auf. Zudem kann die Abtasteinheit Befestigungselemente umfassen, welche die zweiten Ausnehmungen durchdringen, wobei die Befestigungselemente jeweils einen nach innen über das Substrat auskragenden Abschnitt aufweisen. Somit kann durch die Befestigungselemente nicht nur den Metallrahmen fixiert werden, sondern es kann auch gleichzeitig eine axiale Sicherung der Leiterplatte erreicht werden.

Vorteilhafterweise weist der Metallrahmen in Richtung der Achse eine zweite Ausdehnung (Dicke des Metallrahmens) und das Substrat weist in Richtung der Achse eine dritte Ausdehnung (Dicke des Substrats) auf, wobei die zweite Ausdehnung größer ist als die dritte Ausdehnung.

Gemäß einem weiteren Aspekt umfasst die Erfindung auch einen Drehgeber mit einer Abtasteinheit sowie einem Skalenelement, wobei die erste Fläche des Substrats dem Skalenelement mit einem sich in Richtung der Achse erstreckendem Abstand gegenüber liegend angeordnet ist.

Prinzipiell wird zwischen Drehgebern mit Eigenlagerung und Drehgebern ohne Eigenlagerung, im Folgenden als lagerlose Drehgeber bezeichnet, unterschieden. Drehgeber mit Eigenlagerung weisen üblicherweise vergleichsweise kleine Wälzlager auf, so dass die relativ zueinander drehbaren Bauteilgruppen innerhalb des betreffenden Drehgebers in definierter axialer und radialer Position relativ zueinander angeordnet sind. Dagegen muss bei den lagerlosen Drehgebern bei der Montage an einer Maschine darauf geachtet werden, dass die zueinander drehbaren Bauteilgruppen in der richtigen Position insbesondere im korrekten axialen Abstand zueinander festgelegt werden.

Mit Vorteil ist der Drehgeber als ein lagerloser Drehgeber ausgestaltet.

Vorteilhafte Ausbildungen der Erfindung entnimmt man den abhängigen Ansprüchen.

Weitere Einzelheiten und Vorteile des erfindungsgemäßen Drehgebers ergeben sich aus der nachfolgenden Beschreibung eines Ausführungsbeispiels anhand der beiliegenden Figuren.

### KURZE BESCHREIBUNG DER ZEICHNUNGEN

- Figur 1: eine Draufsicht auf einen Metallrahmen der Abtasteinheit,
- Figur 2: eine Seitenansicht auf den Metallrahmen der Abtasteinheit,
- Figur 3: eine Draufsicht auf eine Leiterplatte der Abtasteinheit,
- Figur 4: eine Draufsicht auf die Leiterplatte der Abtasteinheit auf die bezüglich der Figur 3 gegenüber liegende Seite der Leiterplatte,
- Figur 5: eine Draufsicht auf die Abtasteinheit,
- Figur 6: eine Draufsicht auf ein Skalenelement,
- Figur 7: eine Schnittdarstellung eines Drehgebers im eingebauten Zustand,
- Figur 8: eine Detailansicht der Schnittdarstellung des Drehgebers im eingebauten Zustand.

### BESCHREIBUNG DER AUSFÜHRUNGSFORMEN

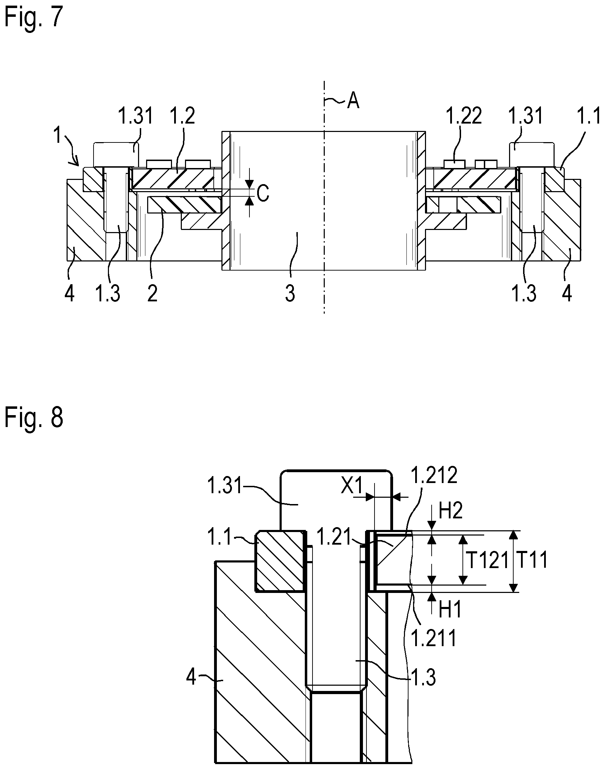

Die Erfindung wird anhand eines Drehgebers (Figur 7) beschrieben, welcher zur Erfassung einer Winkelposition zwischen einer erfindungsgemäßen Abtasteinheit 1 und einem relativ um eine Achse A drehbaren Skalenelement 2 beziehungsweise einer Skala bestimmt ist. Die Abtasteinheit 1 weist einen Metallrahmen 1.1 auf, der im vorgestellten Ausführungsbeispiel aus einer Aluminiumlegierung hergestellt ist.

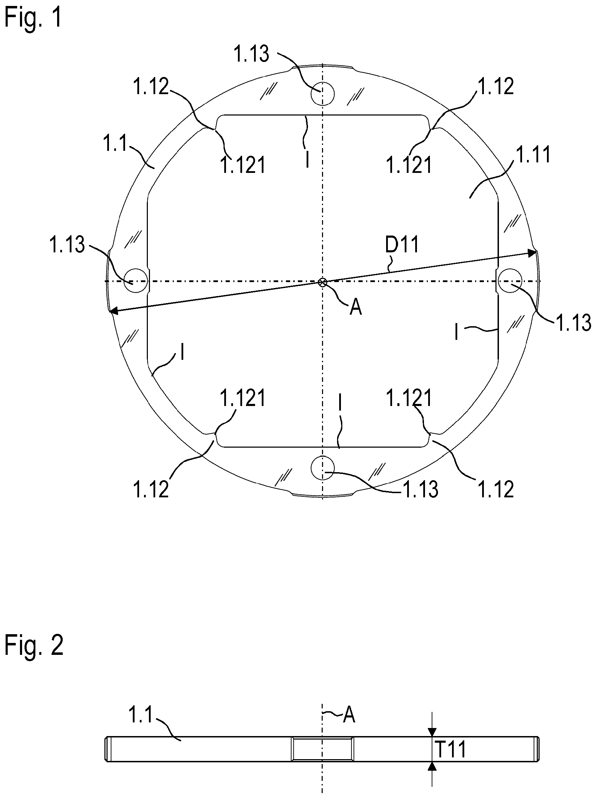

Insbesondere anhand der Figuren 1 und 2 kann die Ausgestaltung des Metallrahmens 1.1 erläutert werden. Der Metallrahmen 1.1 weist eine nahezu kreisförmige Außenkontur auf und hat orthogonal zur Achse eine erste Ausdehnung D11, welche dem maximalen Außendurchmesser des Metallrahmens 1.1 entspricht. Der Metallrahmen 1.1 ist aus einer ebenen Platte mit einer Dicke, die einer zweiten Ausdehnung T11 des Metallrahmens 1.1 entspricht, herausgeschnitten. Die Achse A ist orthogonal zum Metallrahmen 1.1 beziehungsweise zu den Stirnflächen des Metallrahmens 1.1 orientiert. Außerdem weist der Metallrahmen 1.1 eine axial durchgängige erste Ausnehmung 1.11 auf, so dass also der Metallrahmen 1.1 die durchgängige erste Ausnehmung 1.11 umschließt. Die erste Ausnehmung 1.11 ist naturgemäß von einer Innenseite I des Metallrahmens 1.1 begrenzt. Die Innenseite I des Metallrahmens 1.1 ist also parallel zur Achse A orientiert und umgibt die Achse A. Diese Innenseite I weist vier radial zur Achse A hin orientierte, nach innen auskragende Elemente 1.12 auf, die jeweils eine parallel zur Achse A verlaufende Kante 1.121 aufweisen. Die Innenseite I weist keinen Absatz oder Vorsprung auf, der nicht über die gesamte zweite Ausdehnung T11 beziehungsweise über die gesamte Dicke des Metallrahmens 1.1 verlaufen würde. Daher ist die durchgängige erste Ausnehmung 1.11 beispielsweise durch einen Stanzprozess oder einen Laser- beziehungsweise Wasserstrahl-Schneidprozess herstellbar.

Zur Befestigung an einem Maschinenteil weist der Metallrahmen 1.1 zudem zweite Ausnehmungen 1.13, die im vorgestellten Ausführungsbeispiel als Befestigungsbohrungen ausgestaltet sind, auf.

Der Metallrahmen 1.1 weist demnach eine scheibenförmige beziehungsweise ringförmige Gestalt auf. Dabei ist im vorgestellten Ausführungsbeispiel die erste Ausdehnung D11 17,5mal größer als die zweite Ausdehnung T11. Auf der Innenseite I des Metallrahmens 1.1 beziehungsweise an der ersten Ausnehmung 1.11 können virtuell zur Achse parallele Linien angeordnet werden. Jede dieser Linien hat über die zweite Ausdehnung T11 hinweg den gleichen Abstand zur Achse A.

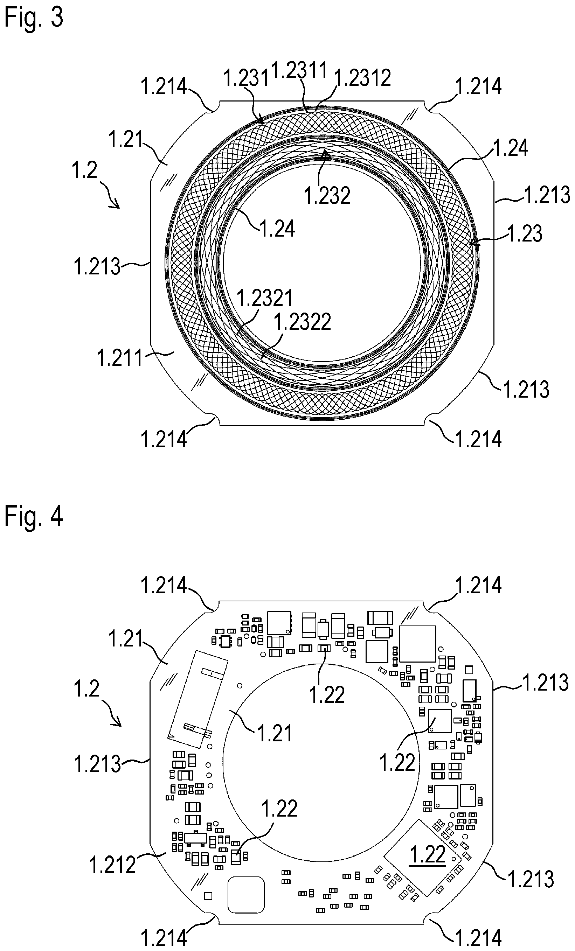

Weiterhin umfasst die Abtasteinheit 1 eine Leiterplatte 1.2. Die Leiterplatte 1.2 ist insbesondere in den Figuren 3 und 4 gezeigt. Demnach weist die Leiterplatte 1.2 ein Substrat 1.21 auf, welches im vorgestellten Ausführungsbeispiel mehrere Lagen aufweist. Das Substrat 1.21 weist eine erste Fläche 1.211, und eine zweite Fläche 1.212 auf, wobei die zweite Fläche 1.212 gegenüberliegend zur erste 1.211 angeordnet ist, sowie eine umlaufende dritte Fläche 1.213, die auch als Mantelfläche bezeichnet werden kann.

An der ersten Fläche 1.211 ist eine Aufnehmeranordnung 1.23 gemäß der Figur 3 angeordnet. Im vorgestellten Ausführungsbeispiel basiert der Drehgeber auf einem induktiven Abtastprinzip, so dass die Aufnehmeranordnung 1.23 zwei Empfängerspuren 1.231, 1.232 aufweist, wobei jede der Empfängerspuren 1.231, 1.232 zwei Empfängerleiterbahnen 1.2311, 1.2312, 1.2321, 1.2322 umfasst. Die die Empfängerleiterbahnen 1.2311, 1.2312, 1.2321, 1.2322 verlaufen auf unterschiedlichen Ebenen mit Durchkontaktierungen, so dass an Kreuzungspunkten unerwünschte Kurzschlüsse vermieden werden. Im gezeigten Ausführungsbeispiel sind zumindest zwei Lagen in dem Leiterplatten- beziehungsweise Substrataufbau vorgesehen. Die Empfängerleiterbahnen 1.2311, 1.2312, 1.2321, 1.2322 weisen einen räumlich periodischen Verlauf auf, der im Wesentlichen sinusförmig beziehungsweise sinusartig ausgestaltet ist.

Empfängerleiterbahnen 1.2311, 1.2312, 1.2321, 1.2322, die zur gleichen Empfängerspur 1.231, 1.232 gehören, sind relativ zueinander entlang der Umfangsrichtung versetzt angeordnet. Im vorgestellten Ausführungsbeispiel sind benachbarte Empfängerleiterbahnen 1.2311, 1.2312, 1.2321, 1.2322 um 1/4 der vollen Sinusperiode (um π/2 oder 90° entlang der ersten Richtung x) zueinander versetzt angeordnet. Die Empfängerleiterbahnen 1.2311, 1.2312, 1.2321, 1.2322 sind elektrisch so verschaltet, dass diese letztlich bezüglich der Positionsbestimmung in der Umfangsrichtung um 90° phasenversetzte Signale liefern können.

Weiterhin umfasst die Abtasteinheit 1 Erregerleiterbahnen 1.24, die ebenfalls an der ersten Fläche 1.211 angeordnet sind und die Empfängerleiterbahnen 1.2311, 1.2312, 1.2321, 1.2322 umschließen.

Zum Betrieb der Erregerleiterbahnen 1.24 und zur Verarbeitung der von den Empfängerleiterbahnen 1.2311, 1.2312, 1.2321, 1.2322 empfangenen Signale ist eine elektronische Schaltung erforderlich. Auf der zweiten Fläche 1.212 der Leiterplatte 1.2, die der ersten Fläche 1.211 gegenüber liegend angeordnet ist, sind elektronische Bauteile 1.22 montiert (in den Figuren sind beispielhaft nur einige wenige elektronische Bauteile mit Bezugszeichen versehen). Diese elektronischen Bauteile 1.22 dienen zur Versorgung der Erregerleiterbahnen 1.24 und zur Verarbeitung der empfangenen Signale. Zudem ist auf der zweiten Fläche 1.212 ein elektrisches Kopplungsstück 1.221 zur Herstellung einer Steckverbindung mit einem Gegenstecker eines Kabels montiert.

Zudem weist die Leiterplatte 1.2 mantelflächenseitig, also an ihrer umlaufenden Mantelseite, vier konkave Einbuchtungen 1.214 auf.

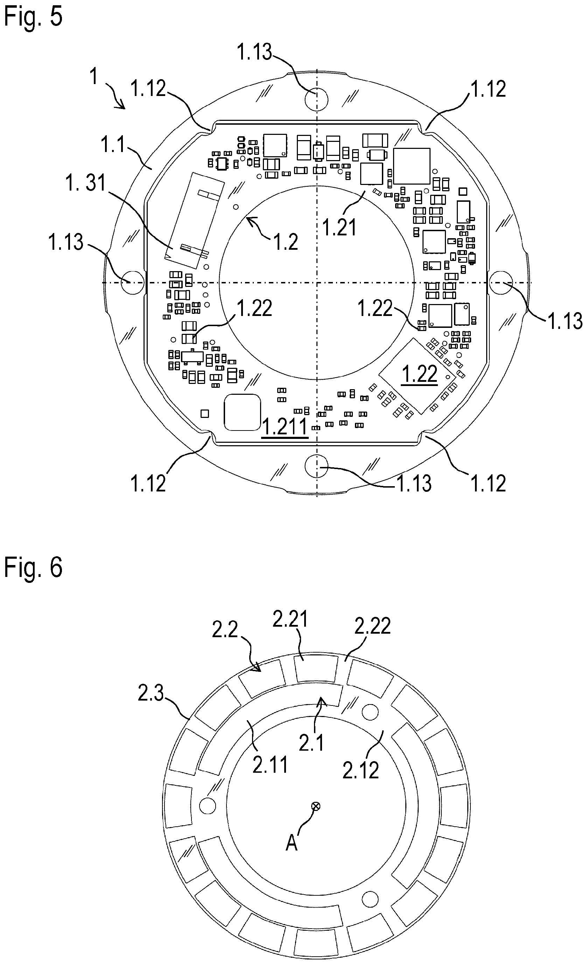

Im Zuge der Montage der Abtasteinheit 1 wird die Leiterplatte 1.2 beziehungsweise das Substrat 1.21 in den Metallrahmen 1.1 gepresst, so dass sich die Kanten 1.121 der auskragenden Elemente 1.12 in das Substrat 1.21 im Bereich der Einbuchtungen 1.214 eingraben (Figur 5). Das Substrat 1.21 hat also an den Kontaktstellen zum Metallrahmen 1.1 ein Übermaß. Dementsprechend greifen die auskragenden Elemente 1.12 derart in die konkaven Einbuchtungen 1.214 ein, dass das Substrat 1.21 unter mechanischer Spannung im Metallrahmen 1.1 fixiert ist. Auf diese Weise ist die Leiterplatte 1.2 mit der Aufnehmeranordnung 1.23 exakt relativ zum Metallrahmen 1.1 beziehungsweise zu den zweiten Ausnehmungen 1.13 in allen Raumrichtungen fixiert, was bezüglich der Messgenauigkeit des Drehgebers wichtig ist.

In der Figur 6 ist das Skalenelement 2 in einer Draufsicht gezeigt. Das Skalenelement 2 besteht aus einem Substrat 2.3, welches im dargestellten Ausführungsbeispiel aus Epoxydharz hergestellt ist und auf welchem zwei Teilungsspuren 2.1, 2.2 angeordnet sind. Die Teilungsspuren 2.1, 2.2 sind ringförmig ausgebildet und bezüglich der Achse A konzentrisch mit unterschiedlichen Durchmessern auf dem Substrat angeordnet. Die beiden Teilungsspuren 2.1, 2.2 bestehen jeweils aus einer periodischen Abfolge von alternierend angeordneten elektrisch leitfähigen Teilungsbereichen 2.11, 2.21 und nichtleitfähigen Teilungsbereichen 2.12, 2.22. Als Material für die elektrisch leitfähigen Teilungsbereiche 2.11, 2.21 wurde im gezeigten Beispiel Kupfer auf das Substrat 2.3 aufgebracht. In den nichtleitfähigen Teilungsbereichen 2.12, 2.22 wurde das Substrat 2.3 dagegen nicht beschichtet.

In der Figur 7 ist ein Drehgeber gezeigt, der die Abtasteinheit 1 und das Skalenelement 2 umfasst. Die Abtasteinheit 1 ist an einem ersten Maschinenteil 4, hier ein Flansch, mit Hilfe von Befestigungselementen 1.3, die im vorgestellten Ausführungsbeispiel als Schrauben ausgestaltet sind, fixiert. Die Befestigungselemente 1.3 sind zu diesem Zweck durch die zweite Ausnehmungen 1.13 gesteckt, so dass diese die zweite Ausnehmungen 1.13 durchdringen. Zudem weisen die Befestigungselemente 1.3 jeweils einen nach innen über das Substrat 1.21 auskragenden Abschnitt 1.31 auf, der im vorgestellten Ausführungsbeispiel der Kopf der Schraube ist.

Gemäß der Figur 8 überragt der auskragende Abschnitt 1.31 das Substrat 1.21 über eine Länge X1. Die Befestigungselemente 1.3 drücken also den Metallrahmen 1.1 gegen den Flansch 4 und sichern gleichzeitig die Leiterplatte 1.2 in axialer Richtung.

Die Leiterplatte 1.2 beziehungsweise das Substrat 1.21 wurde im Zuge der Montage der Abtasteinheit 1 in Richtung der Achse A genau so weit in den Metallrahmen 1.1 gepresst, dass der Metallrahmen 1.1 bezüglich der ersten Fläche 1.211 des Substrats 1.21 einen ersten axialen Überstand H1 aufweist. Die ersten Fläche 1.211 des Substrats 1.21 ist diejenige Seite der Leiterplatte 1.2, an der die Aufnehmeranordnung 1.23 und die Erregerleiterbahnen 1.24 angeordnet sind. Der erste axiale Überstand H1 bezieht sich auf die Stirnfläche des Metallrahmens und die erste Fläche 1.211 des Substrats 1.21.

Zudem ist in der Figur 8 zu sehen, dass die Leiterplatte 1.2 im Metallrahmen 1.1 derart angeordnet ist, dass der Metallrahmen 1.1 bezüglich der zweiten Fläche 1.212 des Substrats 1.21 einen zweiten axialen Überstand H2 aufweist.

Somit weist der Metallrahmen 1.1 in Richtung der Achse A eine größere zweite Ausdehnung T11 auf als das Substrat 1.21, das in Richtung der Achse A eine dritte Ausdehnung T121 aufweist. Das Substrat 1.21 ist also vollständig vom Metallrahmen 1.1 beziehungsweise von der Innenseite I des Metallrahmens 1.1 umgeben und ragt an keiner Stelle axial über die Außenkontur des Metallrahmens 1.1 hervor.

Im zusammengebauten Zustand gemäß der Figur 7 stehen sich die Abtasteinheit 1 und das Skalenelement 2 mit axialem Abstand C beziehungsweise axialem Luftspalt gegenüber. Der axiale Überstand H1 kann bei der Montage etwa durch geeignete Montagevorrichtungen mit Anschlägen einfach aber sehr präzise eingestellt werden, so dass auch der gewünschte Abstand C mit hoher Genauigkeit einfach eingestellt werden kann. Dies erhöht die Messgenauigkeit des Drehgebers.

Bei einer Relativdrehung zwischen dem Skalenelement 2 und der Abtasteinheit 1 wird in Aufnehmeranordnung 1.23 insbesondere in den Empfängerleiterbahnen 1.2311, 1.2312, 1.2321, 1.2322 ein von der jeweiligen Winkelposition abhängiges Signal durch Induktionseffekte erzeugt. Voraussetzung für die Bildung von entsprechenden Signalen ist, dass die Erregerleiterbahnen 1.24 ein zeitlich wechselndes elektromagnetisches Erregerfeld im Bereich der abgetasteten Teilungsstrukturen erzeugen. Im dargestellten Ausführungsbeispiel sind die Erregerleiterbahnen 1.24 als mehrere planar-parallele stromdurchflossene Einzel-Leiterbahnen ausgebildet. Die elektronische Schaltung der Abtasteinheit 1 mit den elektronischen Bauteilen 1.22 arbeitet nicht nur als Auswerteelement, sondern auch als Erregerkontrollelement, unter dessen Kontrolle der Erregerstrom erzeugt wird, welcher dann durch die Erregerleiterbahnen 1.24 fließt.

Werden die Erregerleiterbahnen 1.24 bestromt, so bildet sich um die jeweilige Erregerleiterbahn 1.24 ein schlauch- bzw. zylinderförmig orientiertes elektromagnetisches Feld aus. Die Feldlinien des resultierenden elektromagnetischen Feldes verlaufen in Form konzentrischer Kreise um die Erregerleiterbahnen 1.24, wobei die Richtung der Feldlinien in bekannter Art und Weise von der Stromrichtung in den Erregerleiterbahnen 1.24 abhängt. Im Bereich der elektrisch leitfähigen Teilungsbereiche 2.11, 2.21 werden Wirbelströme induziert, so dass eine von der Winkelstellung abhängige Modulation des Feldes erreicht wird. Entsprechend kann durch die Empfängerspuren 1.231, 1.232 jeweils die relative Winkelstellung bezogen auf die Achse A als Drehachse gemessen werden. Die Paare von Empfängerleiterbahnen 1.2311, 1.2312, 1.2321, 1.2322 sind innerhalb ihrer Empfängerspur 1.231, 1.232 so angeordnet, dass diese jeweils um 90° phasenversetzte Signale liefern, so dass auch eine Bestimmung der Drehrichtung vorgenommen werden kann.

## Patentansprüche

1. Abtasteinheit (1) zur Abtastung eines relativ zur Abtasteinheit (1) um eine Achse (A) drehbaren Skalenelements (2), wobei die Abtasteinheit (1) einen Metallrahmen (1.1) und eine Leiterplatte (1.2) umfasst, wobei
- die Leiterplatte (1.2) ein Substrat (1.21) aufweist, welches eine erste Fläche (1.211),
eine der ersten Fläche (1.211) gegenüberliegende zweite Fläche (1.212) sowie
eine umlaufende dritte Fläche (1.213) aufweist, wobei an der ersten Fläche (1.211) eine Aufnehmeranordnung (1.23)
angeordnet ist und an der zweiten Fläche (1.212) elektronische Bauteile (1.22) montiert sind und die dritte Fläche (1.213) mehrere konkave Einbuchtungen (1.214) aufweist, wobei
- der Metallrahmen (1.1) eine durchgängige erste Ausnehmung (1.11) aufweist, die von einer Innenseite (I) des Metallrahmens (1.1) radial begrenzt ist, wobei die Innenseite (I) mehrere nach innen ragende Elemente (1.12) aufweist, wobei
die Innenseite (I) des Metallrahmens (1.1) die Einbuchtungen (1.214) des Substrats (1.21) umschließt und
die nach innen ragenden Elemente (1.12) derart in die konkaven Einbuchtungen (1.214) eingreifen, dass das Substrat (1.21) unter mechanischer Spannung im Metallrahmen (1.1) fixiert ist.

2. Abtasteinheit (1) gemäß einem der vorhergehenden Ansprüche, wobei die nach innen ragenden Elemente (1.12) jeweils eine parallel zur Achse (A) verlaufende Kante (1.121) aufweisen.

3. Abtasteinheit (1) gemäß einem der vorhergehenden Ansprüche, wobei der Metallrahmen (1.1) eine scheibenförmige Gestalt aufweist.

4. Abtasteinheit (1) gemäß einem der vorhergehenden Ansprüche, wobei der Metallrahmen (1.1) in einer Richtung senkrecht zur Achse (A) eine erste Ausdehnung (D11) aufweist und in Richtung der Achse (A) eine zweite Ausdehnung (T11) aufweist, wobei die erste Ausdehnung (D11) mindestens fünfmal größer ist als die zweite Ausdehnung (T11).

5. Abtasteinheit (1) gemäß einem der vorhergehenden Ansprüche, wobei die Leiterplatte (1.2) im Metallrahmen (1.1) derart angeordnet ist, dass der Metallrahmen (1.1) bezüglich der ersten Fläche (1.211) des Substrats (1.21) einen ersten axialen Überstand (H1) aufweist.

6. Abtasteinheit (1) gemäß einem der vorhergehenden Ansprüche, wobei die Leiterplatte (1.2) im Metallrahmen (1.1) derart angeordnet ist, dass der Metallrahmen (1.1) bezüglich der zweiten Fläche (1.212) des Substrats (1.21) einen zweiten axialen Überstand (H2) aufweist.

7. Abtasteinheit (1) gemäß einem der vorhergehenden Ansprüche, wobei der Metallrahmen (1.1) zweite Ausnehmungen (1.13) zur Befestigung an einem Maschinenteil (4) aufweist.

8. Abtasteinheit (1) gemäß dem Anspruch 7, wobei die Abtasteinheit (1) zudem Befestigungselemente (1.3) umfasst, welche die zweiten Ausnehmungen (1.13) durchdringen, wobei die Befestigungselemente (1.3) jeweils einen nach innen über das Substrat (1.21) auskragenden Abschnitt (1.31) aufweisen.

9. Abtasteinheit (1) gemäß einem der vorhergehenden Ansprüche, wobei der Metallrahmen (1.1) in Richtung der Achse (A) eine zweite Ausdehnung (T11) aufweist und das Substrat (1.21) in Richtung der Achse (A) eine dritte Ausdehnung (T121), wobei die zweite Ausdehnung (T11) größer ist als die dritte Ausdehnung (T121)

10. Drehgeber umfassend eine Abtasteinheit (1) gemäß einem der vorhergehenden Ansprüche sowie ein Skalenelement (2), wobei die erste Fläche (1.211) dem Skalenelement (2) mit einem sich in Richtung der Achse (A) erstreckendem Abstand (C) gegenüber liegend angeordnet ist.

11. Drehgeber gemäß dem Anspruch 10, wobei der Drehgeber als ein lagerloser Drehgeber ausgestaltet ist.

## Claims

1. Scanning unit (1) for scanning a scale element (2) that can be rotated relative to the scanning unit (1) about an axis (A), wherein the scanning unit (1) comprises a metal frame (1.1) and a printed circuit board (1.2), wherein
- the printed circuit board (1.2) has a substrate (1.21) which has a first surface (1.211),
a second surface (1.212) opposite the first surface (1.211) and
a circumferential third surface (1.213), wherein
a transducer assembly (1.23) is arranged on the first surface (1.211) and electronic components (1.22) are mounted on the second surface (1.212), and the third surface (1.213) has a plurality of concave indentations (1.214), wherein
- the metal frame (1.1) has a continuous first aperture (1.11), which is delimited radially by an inner side (I) of the metal frame (1.1), wherein the inner side (I) has a plurality of inwardly projecting elements (1.12), wherein
the inner side (I) of the metal frame (1.1) encloses the indentations (1.214) of the substrate (1.21), and the inwardly projecting elements (1.12) engage in the concave indentations (1.214) in such a way that the substrate (1.21) is fixed in the metal frame (1.1) under mechanical tension.

2. Scanning unit (1) according to the preceding claim, wherein the inwardly projecting elements (1.12) each have an edge (1.121) running parallel to the axis (A).

3. Scanning unit (1) according to one of the preceding claims, wherein the metal frame (1.1) has a disc-like shape.

4. Scanning unit (1) according to one of the preceding claims, wherein the metal frame (1.1) has a first extent (D11) in a direction perpendicular to the axis (A) and a second extent (T11) in the direction of the axis (A), wherein the first extension (D11) is at least five times larger than the second dimension (T11).

5. Scanning unit (1) according to one of the preceding claims, wherein the printed circuit board (1.2) is arranged in the metal frame (1.1) in such a way that the metal frame (1.1) has a first axial projection (H1) with respect to the first surface (1.211) of the substrate (1.21).

6. Scanning unit (1) according to one of the preceding claims, wherein the printed circuit board (1.2) is arranged in the metal frame (1.1) in such a way that the metal frame (1.1) has a second axial projection (H2) with respect to the second surface (1.212) of the substrate (1.21).

7. Scanning unit (1) according to one of the preceding claims, wherein the metal frame (1.1) has second apertures (1.13) for securing to a machine part (4).

8. Scanning unit (1) according to Claim 7, wherein the scanning unit (1) additionally comprises securing elements (1.3) which penetrate the second apertures (1.13), wherein the securing elements (1.3) each have a section (1.31) that projects inwards over the substrate (1.21).

9. Scanning unit (1) according to one of the preceding claims, wherein the metal frame (1.1) has a second extent (T11) in the direction of the axis (A), and the substrate (1.21) has a third extent (T121) in the direction of the axis (A), wherein the second extent (T11) is greater than the third extent (T121).

10. Rotary encoder comprising a scanning unit (1) according to one of the preceding claims and a scale element (2), wherein the first surface (1.211) is arranged opposite the scale element (2) at a distance (C) extending in the direction of the axis (A).

11. Rotary encoder according to Claim 10, wherein the rotary encoder is configured as a bearingless rotary encoder.

## Revendications

1. Unité de balayage (1) destinée à balayer un élément gradué (2) qui peut tourner sur un axe (A) par rapport à l'unité de balayage (1), l'unité de balayage (1) comprenant un cadre métallique (1.1) et une carte de circuit imprimé (1.2),
- la carte de circuit imprimé (1.2) comportant un substrat (1.21) qui comporte une première surface (1.211), une deuxième surface (1.212) opposée à la première surface (1.211) ainsi qu'une troisième surface périphérique (1.213), un ensemble capteur (1.23) étant disposé sur la première surface (1.211) et des composants électroniques (1.22) étant montés sur la deuxième surface (1.212) et la troisième surface (1.213) comportant une pluralité de creux concaves (1.214),
- le cadre métallique (1.1) comportant un premier évidement traversant (1.11) qui est délimité radialement par un côté intérieur (I) du cadre métallique (1.1), le côté intérieur (I) comportant plusieurs éléments (1.12) saillant vers l'intérieur, le côté intérieur (I) du cadre métallique (1.1) entourant les creux (1.214) du substrat (1.21) et les éléments (1.12) saillant vers l'intérieur s'engageant dans les creux concaves (1.214) de telle sorte que le substrat (1.21) soit fixé sous contrainte mécanique dans le cadre métallique (1.1).

2. Unité de balayage (1) selon l'une des revendications précédentes, les éléments (1.12) saillant vers l'intérieur comportant chacun un bord (1.121) qui s'étend parallèlement à l'axe (A).

3. Unité de balayage (1) selon l'une des revendications précédentes, le cadre métallique (1.1) ayant une forme de disque.

4. Unité de balayage (1) selon l'une des revendications précédentes, le cadre métallique (1.1) comportant une première extension (D11) dans une direction perpendiculaire à l'axe (A) et une deuxième extension (T11) dans la direction de l'axe (A), la première extension (D11) étant au moins cinq fois plus grande que la deuxième extension (T11).

5. Unité de balayage (1) selon l'une des revendications précédentes, la carte de circuit imprimé (1.2) étant disposé dans le cadre métallique (1.1) de manière à ce que le cadre métallique (1.1) présente une première projection axiale (H1) par rapport à la première surface (1.211) du substrat (1.21).

6. Unité de balayage (1) selon l'une des revendications précédentes, la carte de circuit imprimé (1.2) étant disposée dans le cadre métallique (1.1) de manière à ce que le cadre métallique (1.1) présente une deuxième projection axiale (H2) par rapport à la deuxième surface (1.212) du substrat (1.21).

7. Unité de balayage (1) selon l'une des revendications précédentes, le cadre métallique (1.1) comportant des deuxièmes évidements (1.13) destinés à la fixation à une pièce de machine (4).

8. Unité de balayage (1) selon la revendication 7, l'unité de balayage (1) comprenant également des éléments de fixation (1.3) qui pénètrent dans les deuxièmes évidements (1.13), les éléments de fixation (1.3) comportant chacun une portions (1.31) faisant saillie vers l'intérieur sur le substrat (1.21).

9. Unité de balayage (1) selon l'une des revendications précédentes, le cadre métallique (1.1) comportant une deuxième extension (T11) dans la direction de l'axe (A) et le substrat (1.21) comportant une troisième extension (T121) dans la direction de l'axe (A), la deuxième extension (T11) étant plus grande que la troisième extension (T121)

10. Codeur rotatif comprenant une unité de balayage (1) selon l'une des revendications précédentes et un élément gradué (2), la première surface (1.211) étant disposée à l'opposé de l'élément gradué (2) à une distance (C) s'étendant dans la direction de l'axe (A).

11. Codeur selon la revendication 10, le codeur étant conçu comme un codeur sans palier.
